# EUROPEAN PATENT SPECIFICATION

(11) **EP 0 423 735 B1**
(45) Date of publication and mention of the grant of the patent: **03.05.1995**
(21) Application number: 90119852.3
(22) Date of filing: 16.10.1990
(51) Int. Cl.: G06F 11/10

(54) **Microprocessor having parity check function**
Mikroprozessor mit einer Paritätsprüffunktion
Microprocesseur à fonction de vérification de parité

(30) Priority: 17.10.1989 JP 270885/89
(43) Date of publication of application: 24.04.1991
(73) Proprietor: NEC CORPORATION, Tokyo (JP)
(72) Inventor: Ueno, Narihisa, c/o NEC IC, Minato-ku, Tokyo (JP)
(74) Representative: Pätzold, Herbert, Dr.-Ing.

(56) References cited:
- US-A- 3 416 132
- US-A- 4 737 956
- ELECTRONIQUE INDUSTRIELLE no. 11, 1 March 1981, PARIS,FRANCE pages 37 - 38; 'Multiplexeurs Ultra-Rapided pour Traitement de Donnés'

## Description

The present invention relates to a microprocessor as mentioned in the preamble of claim 1 and, more particularly, to a microprocessor capable of being used in a high reliability data processing system.

In the prior art US-A-4 737 956 disclosing a data processing apparatus with a data field having more than one error checked group of information units, the respective groups including data and error codes for identifying errors in the data of respective group. Each group consisting of 8 bits for instance, and being accompanied with a parity bit. However, a problem to be solved by this prior art is to check power gates receiving in common with a control signal controlling the input of each group.

As one method for structuring a high reliability data processing system, it is also known in the art to accompany data with redunant information. In a system utilizing, for example, parity information as redudant information, the data read out from a memory and/or peripheral I/O units are checked in validity or correctness added thereto.

A microprocessor used in such a high reliability data processing system has a relatively wide data bus width such as 32-bit for a purpose of enhancing data processing efficiency and speed and thus executs data read/write operations in word (32-bit) units. Such a microprocessor is, however, further constructed to perform data read/write operation in byte (8-bit) and half-word (16-bit) units. Upon data access operation in byte or half-word units, only a part of data terminals of the microprocessor, which are coupled to the data bus, is supplied with meaningful information and the remaining part of them is supplied with meaningless information. In addition, a recent high performance microprocessor has been constructed to comply with change in data bus width in accordance with a so-called bus-sizing manner.

Thus, the bit length and/or position of the meaningful information supplied to the data terminals of the microprocessor may be changed in accordance with the data length to be accessed and/or the bus-sizing manner. In other words, there may exist invalid data terminals supplied with meaningless information. With respect to such invalid data terminals, it is required due to the parity check function to supply predetermined fixed values to the invalid data terminals. If it is not done, a parity error may occur due to the meaningless information, so that the correct and meaningful information, which has been actually supplied to the valid data terminals, is regarded as being incorrect data. The processing efficiency is thereby deteriorated.

However, the number (or length) and/or position of the invalid data terminals may be changed every data read access operation. Moreover, the width of the data bus may be varied dynamically by a dynamic bus sizing. Accordingly, it is substantially impossible in an actual system to supply the predetermined fixed values to selected ones of the data terminals of the microprocessor. After all, the parity check function is subjected to no-operation. The quality of data to be processed is thus lowered to restrict the structure of a high reliability data processing system.

Object of the present invention is to provide an improved microprocessor as mentioned above for structuring a high reliability data processing system.

Another object of the present invention is to provide a microprocessor which can check the validity or correctness of meaningful data to be processed supplied to a part of data terminals without manipulating data to be supplied to the remaining ones thereof.

Still another object of the present invention is to provide a microprocessor having an improved parity check function.

In accordance with the present invention these objects are obtained with the features of the characterizing portion of claim 1. Preferred embodiments of the invention are mentioned in the dependent claims.

Therefore a microprocessor according to the present invention comprises a plurality of groups of data terminals each including a predetermined number of data terminals, a plurality of redundant information terminals each provided correspondingly to each of the groups of data terminals, a plurality of judging circuits each coupled to the corresponding one of the groups of data terminals and the corresponding one of the redundant information terminals and responsive to redundant information from the corresponding redundant information terminal for producing a detection signal representing whether or not data supplied to the corresponding group of data terminals is correct, a mask control circuit for generating mask information for masking selected one or ones of the detection signals produced by the judging circuits, and a check circuit responsive to non-masked detection signal or signals for producing data valid/invalid signal representing whether data supplied to the microprocessor is valid or invalid.

The content of the mask information is controlled by the length and/or position of data to be accessed, or bus sizing information, or both of them. Accordingly, even if the judging circuit or circuits, which correspond to the group or groups of data terminals supplied with meaningless data, produce the detection signal representive of the supplied data being incorrect, that detection signal is masked by the mask information. The data valid/invalid signal is thereby controlled by the non-masked detection signal or signals.

Thus, the data to be processed is checked in validity or correctness without taking the meaningless data input into consideration, so that a high reliability data processing system can be structured by use of the microprocessor according to the present invention.

### BRIEF DESCRIPTION OF THE DRAWINGS

The above and other objects, advantages and features of the present invention will be more apparent from the following description taken in conjunction with the accompanying drawings, in which:
Fig. 1 is a block diagram of a system employing a microprocessor according to an embodiment of the present invention;
Fig. 2 is a internal circuit diagram representative of circuits 11 to 13 shown in Fig. 1;
Fig. 3 is a diagram representative of a mask signal operation of a decoder shown in Fig. 2;
Fig. 4 is a block diagram representative of a part of a microprocessor according to another embodiment of the present invention; and
Fig. 5 is a diagram representative of a mask signal operation of a decoder shown in Fig. 4 in a case of an active level of a bus sizing signal B̅S̅Z̅.

### DETAILED DESCRIPTION OF THE INVENTION

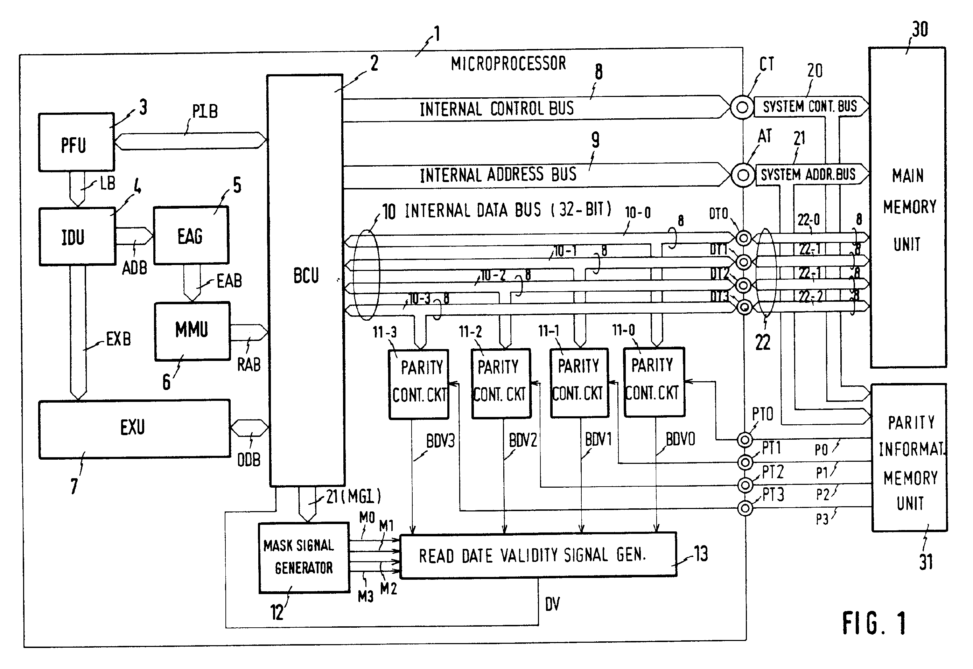

Referring now to Fig. 1, a microprocessor 1 according to an embodiment of the present invention is fabricated on a single semiconductor substrate as an integrated circuit device and includes a bus control unit (BCU) 2, an instruction prefetch unit (PFU) 3, an instruction decoder unit (IDU) 4, an effective address generator (EAG) 5, a memory management unit (MMU) 6 and an instruction execution unit (EXU) 7. PFU 3 performs an instruction prefetch operation and temporarily stores therein the prefetched instruction supplied via a bus PIB. IDU 4 decodes the instruction supplied via a bus 18 from PFU 3 and then generates operand access information and data processing information. The operand access information is used for accessing operand data and supplied via a bus ADB to EAG 5. The data processing information is used for executing an instruction and supplied via a bus EXB to EXU 7. EAG 5 calculates and generates an effective address in response to the operand access information. The effective address is transferred via a bus EAB to MMU 6 and then translated into a real address which is in turn supplied via a bus RAB to BCU 2 along with other access information. EXU 7 executes an instruction in response to the data processing information with supplying or receiving operand data to or from BCU 2 via a bus ODB.

The microprocessor 1 further includes a set of control terminals CT, a set of address terminals AT and a set of data terminals DT which are in turn coupled to a main memory unit 30 via a system control bus 20, a system address bus 21 and a system data bus 22, respectively. The memory unit 30 stored a string of instructions for a program to be executed and operand data to be processed. Although not shown, the buses 20, 21 and 22 are further coupled to a plurality of peripheral I/O units. In the inside of the microprocessor 1, BCU 2 is coupled via an internal control bus 8, an internal address bus 9 and an internal data bus 10 to the control terminals CT, the address terminals AT and the data terminals DT, respectively.

In the present embodiment, the number of the data terminals DT is 32. Each of the internal and system data buses 10 and 22 is thus a 32-bit length. That is, one word is composed of 32 bits. In accordance with the present invention, the data terminals DT (accordingly, the internal and system data buses 10 and 22) are classified into four groups DT0, DT1, DT2 and DT3 (10-0, 10-1, 10-2 and 10-3; 22-0, 22-1, 22-2 and 22-3). Each of groups DTO to DT3 has one byte (8-bit) length. The least significant bit (LSB) and the most significant bit (MSB) of one word (32-bit) data belong to the first group DTO and the third group DT3, respectively. There are further provided four parity control circuits 11-0, 11-1, 11-2 and 11-3 and four parity information terminals PT0, PT1, PT2 and PT3 correspondingly to fourth groups of data terminals DT0, DT1, DT2 and DT3, respectively. Each of the parity control circuits 11-0 to 11-3 calculates the syndrome of one byte (8-bit) data supplied thereto and then controls the logic level of a byte data validity signal BDV in response to whether or not the calculated result is coincident with the parity information supplied thereto from the corresponding parity terminal PT. The parity terminals PT0 to PT3 are supplied with parity information P0 to P4 from a parity information memory unit 31, respectively. This unit 31 is provide to form a pair with respect to the main memory unit 30 and thus coupled to the system control and address buses 20 and 21. Accordingly, in synchronism with the data output from the main memory unit 30, the parity information memory unit 31 outputs four bits of parity information P0 to P3 corresponding respectively to four byte data constituting one word data outputted from the main memory units 30 and supplies them via the parity terminals PT0 to PT3 to the parity control circuits 11-0 to 11-3, respectively. The byte data validity signals BDV0 to BDV3 from the circuits 11-0 to 11-3 are supplied to a read data valid/invalied signal generator 13. This generator 13 is further supplied with mask signals M0 to M3 from a mask signal generator 12. These mask signals M0 to M3 correspond to the signals BDV0 to BDV3, respectively. The mask signal generator 12 responds to mask creation information MGI supplied via a data line 21 from BCU 2 and controls the logic level of each of the mask signals M0 to M3. The generator 13 responds to the signals BDV0 to BDV3 and M0 to M3 and generates a read data validity signal DV representing whether the data supplied to the data terminals DT by one data read access operation is valid or invalid. This signal DV is supplied to BCU 2. If the signal DV indicates the invalidity of the read-out data, BCU 2 initiates again the data read bus cycle to read the desired data.

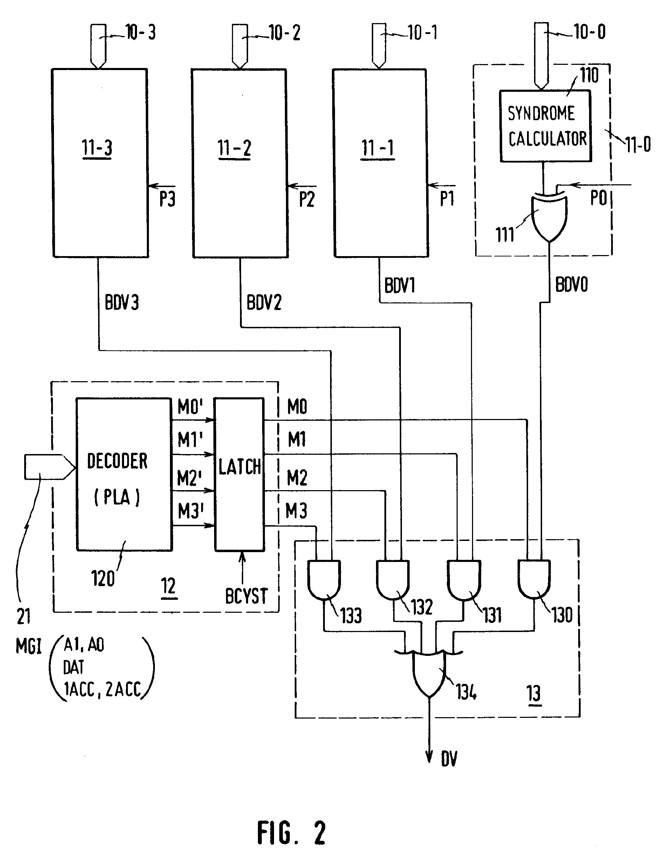

Referring to Fig. 2, each of the parity control circuit 11-0 to 11-3 includes a syndome calculator 110 and an exclusive OR (EX-OR) gate 111 as a comparator. The calculator 110 calculates the syndrome of one byte data supplied thereto, and the calculated resultant data is compared with the corresponding parity information P by the EX-OR gate 111. Therefore, when she calculated resultant data is coincident with the parity information P, i.e. when the read-out one byte data is valid (or correct), the corresponding byte data validity signal BDV takes the low level. On the other hand, incorrect byte data is supplied to the microprocessor 1, the signal BDV is changed to the high level. The byte data validity signals BDV0 to BDV3 thus generated are supplied respectively to first input nodes of four AND gates 130 to 133 in the circuit 130. The second nodes of the AND gates 130 to 133 are supplied with the mask signals M0 to M3, respectively. The low level of the mask signal M0, M1, M2, or M3 thus masks the corresponding one of the validity signals BDV0 to BDV3, respectively. The outputs of the AND gates 130 to 133 are supplied to an OR gate 134, the output of which is in turn lead out as the read data validity signal DV. The mask signal generator 12 includes a decoder 120 constituted of PLA (Programmable Logic Array) and a latch circuit 121 for latching output signals M0′ to M3′ of the decoder 120 and generating them as the mask signal M0 to M3, respectively. The mask creation information MGI supplied to the decoder 120 via the line 21 from BCU 2 includes the less significant two bits A0 and A1 (A0 being LSB) of the operand real address translated by MMU 6, data type information DAT indicative of the length of data to be processed, and bus cycle information 1ACC and 2ACC representative of a bus cycle state of BCU 2. The latch circuit 121 petches the outputs M0′ to M3′ of the decoder 120 in response to a bus cycle start signal BCYST indicating that BCU 2 starts to initiate a data read bus cycle.

Since one word is composed of 32 bits in this embodiment, the data of 32-bit (4-byte) length is supplied to the data terminals DT by one memory read access operation. Therefore, the less significant two bits A0 and A1 of the real address are not used and thus not transferred onto the address buses 9 and 21. The remaining more significant bits of the real address are used as an word address. On the other hand, the read address including less significant two bits A0 and A1 thereof indicates a start byte position of the data to be processed, and the data type information DAT indicates the length of the data to be processed from that start byte position. In this embodiment, the data type information DAT consists of two bits which takes a value of "00", "01" or "10". The value "00", "01" and "10" indicates that the length of the data' to be processed is one byte (8-bit), half-word (16-bit) and one word (32-bit), respectively. The information indicative of the data type is contained in an instruction to be executed and supplied to BCU 2 from IDU 4 via EAG 5 and MMU 6. Since the start position of the data to be processed is not always coincident with the word boundary in a memory space, the data to be processed having one word length may be often composed of a part of data accessed by a certain word address and a part of data accessed by a next word address. In such a case, BCU 2 performs a data read access operation twice. The signal 1ACC takes an active level in the first bus cycle of that two access operations and the signal 2ACC takes the active level in the second bus cycle thereof.

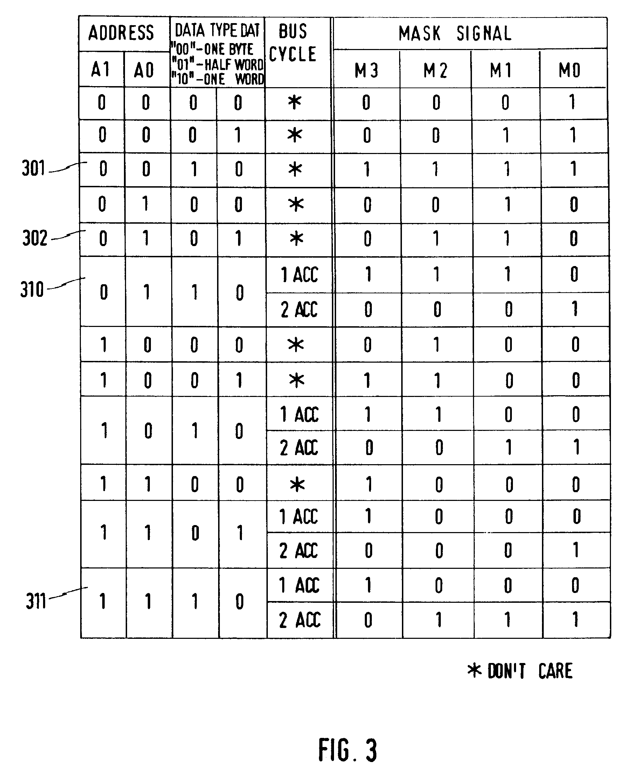

The decoder 120 responds to the mask creation information MGI (A0, A1, DAT, 1ACC and 2ACC) thus generated and generates its outputs M0′ to M3′, i.e. the mask signals M0 to M3, as shown in Fig. 3. For example, see the row in which the less significant two bite A0 to A1 of the real address are bother "0" and the data type information DAT is "00". This indicates that the start byte of the data to be processed is positioned on the first byte of the data accessed by a word address and the length of the data to be processed is one byte. Therefore, the decoder 120 generates the mask signals M0, M1, M2 and M3 of "0001". Since the mask signals M0 to M3 having that value are supplied to the AND gates 130 to 133, respectively, the byte data validity signals BDV1, BDV2 and BDV3 for more significant three byte data of one word data read out from the memory 30 are asked. That is, these three byte data are dealt with as meaningless data and thus the parity check operation for those data is ignored. On the other hand, the parity check operation is performed on the least significant one byte data. Specifically, that one byte data and the parity information P0 corresponding thereto are supplied to the parity control circuit 11-0. The syndrome of the supplied one byte data is calculated and then compared with the parity information P0 by the EX-OR gate 111. The byte data validity signal BDV0 is supplied through the AND gate 130 to the OR gate 134. On the other hand, the other three inputs of the OR gate 134 are supplied with "0" due to the mask signals M1 to M3. As a result, the read data validity data PV takes the low level "0" when the one byte data is checked to be valid or correct, whereas it takes the high 'level "1" when the data is checked to be incorrect.

As another example, see the row in which the less significant two address bits A1 and A0 are "0" and "1" and the data type DAT is "10". This indicated that the start byte of the data to be processed, positions on the second byte of the read-out word data and the length of the data to be processed is one word. Therefore, all of the data to be processed can be read out from the memory 30 only by one data read access operation. BCU 2 performs the data read access operation twice. The signal 1ACC becomes active in the first bus cycle, so that a set of the mask signals M0 to M3 takes a value of "0111". Only the byte data validity signal BDV0 is thereby masked, so that the level of the read data validity signal DV is controlled in accordance with the other three signal BDV1 to BDV3. Since the signal 2ACC becomes active in the second bus cycle, a set of the mask signals M0 to M3 is changed to a value of "1000". The least significant one byte data of the data read out by the second bus cycle is thus subjected to the parity check operation.

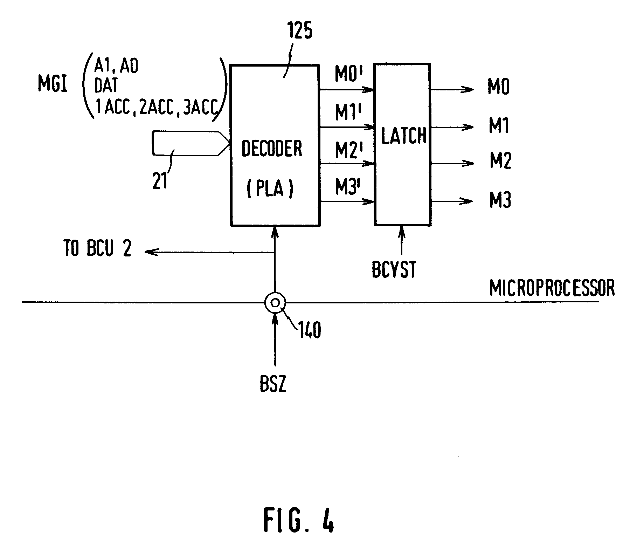

The number and/or position of byte data which are not processed may be changed not only an instruction to be executed but also a so-called bus sizing. Only a part of a microprocessor which complies with the bas sizing is shown in Fig. 4 as another embodiment.

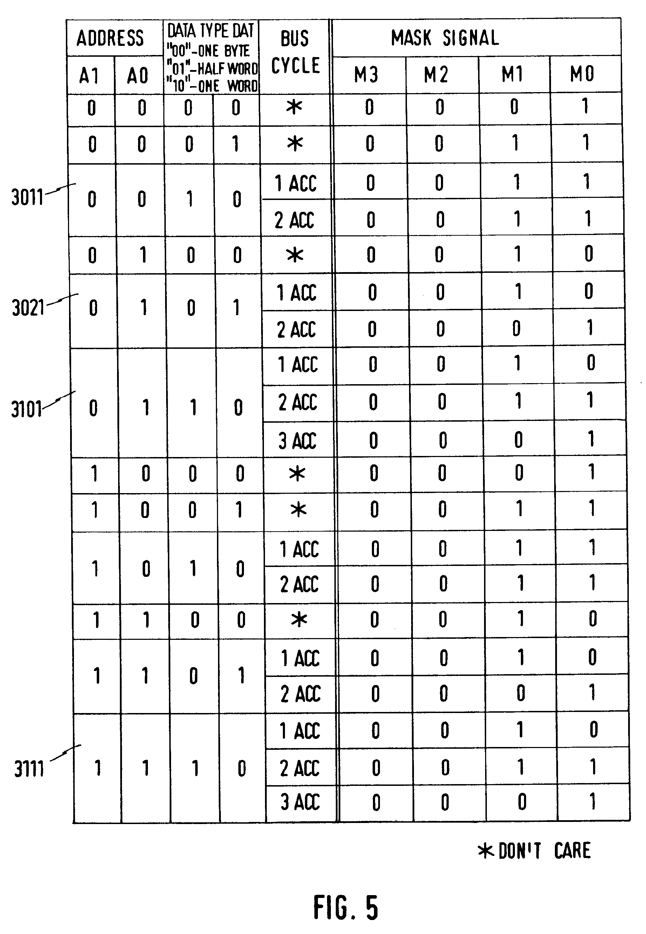

The microprocessor according to this embodiment further includes a bus sizing control terminal 140 and a bus sizing signal B̅S̅Z̅ applied to this terminal 140 is supplied to a decoder 125 as a part of mask creation information and further supplied to BCU 2. The bus sizing signal B̅S̅Z̅ commands BCU 2 to deal with the system data bus 22 as a 32-bit width or a 16-bit width. The logic "1" of the signal B̅S̅Z̅ designates the 32-bit width bus and the logic "0" thereof designates the 16-bit width bus. When the signal B̅S̅Z̅ is at the logic "1", the same operation as that of Fig. 1 is performed. That is, the decoder 125 generates the mask signals M0 to M3 in accordance with Fig. 3. On the other hand, when the signal B̅S̅Z̅ is at the logic "0" to designate the 16-bit width bus, all the data to be processed can be accessed by one data read operation in memory accesses shown by the reference numerals 301 and 302 in Fig. 2. Therefore, BCU 2 performs twice the data read access operations. In addition, in the memory accesses shown by the reference numerals 310 and 311 in Fig. 3, three data read access operations are required to obtain all the data to be processed. Moreover, any meaningful data are not supplied to the more significant two groups of data terminals DT2 and DT3. Therefore, the decoder 125 responds to the bus sizing signal B̅S̅Z̅ "0" and a signal 3ACC which becomes active in a third bus cycle of BCU 2 and further to the above information A1, A0, DAT, 1ACC and 2ACC and generates the mask signals M0 to M3 in accordance with Fig. 5. The more significant two mask signals M2 and M3 are always held at she level "0". Each of the memory accesses shown by 301 and 302 in Fig. 3 is performed by two bus cycles, as shown by 3011 and 3021 in Fig. 5, and each of the memory accesses shown by 310 and 311 in Fig. 3 is performed by three bus cycles, as shown by 3101 and 3111 in Fig. 5.

When this microprocessor is employed in a system having a data bus of a 16-bit width, the bus sizing signal B̅S̅Z̅ is held at the level "0" upon a system reset operation. In a case of a system having a data bus of a 32-bit width, a memory and/or peripheral I/O units of a 16-bit construction are often used and coupled to the 32-bit system data bus 22. In that case, these memory and the peripheral units return the bus sizing signal B̅S̅Z̅ of "0" to the terminal 140 as a dynamic bus sizing in response to an access request from the microprocessor, so that the parity check operation shown in Fig. 5 is performed.

It should be noted that the data write operation into the memory 30 and the generation of purity information and the write operation there of into the memory 31 responsive to the data write operation are omitted from the above description, since those operations are not directly related to the present invention.

## Claims

1. A microprocessor (1) comprising a plurality of groups of data terminals (DT), a plurality of redundant information terminals (PT) provided correspondingly to said groups of data terminals (DT), respectively, a plurality of detection means (11) each coupled to a corresponding one of said groups of data terminals and a corresponding one of said redundant information terminals and responsive to redundant information (P) from the corresponding redundant information terminal for detecting whether or not data supplied to the corresponding group of data terminals is valid to produce a detection signal (BDV) characterized by, control means (12) for generating mask information (M) for masking selected one or ones of said detection signals (BDV) from said plurality of detection means (11), and means (13) responsive to the non-masked detection signal or signals for producing a signal (DV) representing whether or not data supplied to said microprocessor is valid.

2. The microprocessor as claimed in claim 1, wherein said control means (12) generates said mask information in response to at least one of length and position of data to be accessed.

3. The microprocessor as claimed in claim 1 or claim 2, wherein said control means generates said mask information in response to bus sizing information (BSZ) indicating width of a data bus through which data to be accessed are transferred.

## Patentansprüche

1. Mikroprozessor (1), bestehend aus
einer Vielzahl von Anordnungen von Datenterminals (DT),
einer Vielzahl von redundanten Informationsterminals (PT), die jeweils für die zugeordneten Anordnungen von Datenterminals (DT) bereitgestellt sind,
einer Vielzahl von Detektionseinrichtungen (11), jede mit einer zugeordneten Anordnung der Datenterminals und mit einem zugeordneten redundanten Informationsterminal gekoppelt und ansprechfähig von der redundanten Information (P) von dem zugeordneten redundanten Informationsterminal zur Detektion ob Daten, die in die zugeordnete Anordnung von Datenterminals eingespeist sind, zulässig sind ein Detektionssignal (BDV) zu erzeugen,
dadurch gekennzeichnet, daß
der Mikroprozessor außerdem besteht aus
Kontrolleinrichtungen (12) zur Erzeugung einer Maskeninformation (M) zum Ausblenden eines oder mehrerer der Detektionssignale (BDV) aus der Vielzahl der Detektionseinrichtungen (11) und
Einrichtungen (13), die ansprechfähig von dem nicht ausgeblendetem Detektionssignal oder -Signalen zur Herstellung eines Signals (DV) sind, das angibt, ob Daten, die in den Mikroprozessor eingespeist sind, gültig sind oder nicht.

2. Mikroprozessor nach Anspruch 1,
in dem
die Kontrolleinrichtung (12) die Maskeninformation ansprechfähig von wenigstens einer aus Länge und/oder Position der Daten, auf die zugegriffen werden soll, erzeugt.

3. Mikroprozessor nach Anspruch 1 oder Anspruch 2,
in dem
die Kontrolleinrichtung die Maskeninformation ansprechfähig von der Bus-Dimensionierungs-Information (BSZ) erzeugt, die die Breite des Datenbusses angibt, durch den die Daten, auf die zugegriffen werden soll, übertragen werden.

## Revendications

1. Microprocesseur (1) comprenant une pluralité de groupes de bornes de données (DT), une pluralité de bornes d'informations redondantes (PT) respectivement prévues de façon correspondante auxdits groupes de bornes de données (DT), une pluralité de moyens de détection (11) chacun relié à l'un qui lui correspond desdits groupes de bornes de données et à l'une qui lui correspond desdites bornes d'informations redondantes et répondant à l'information redondante (P) provenant de la borne d'information redondante correspondante, en détectant le fait que la donnée fournie au groupe correspondant de bornes de données est valide ou non afin de produire un signal de détection (BDV), caractérisé par un moyen de commande (12) pour produire une information de masque (M) destinée à masquer un ou plusieurs signaux sélectionnés parmi lesdits signaux de détection (BDV) provenant de ladite pluralité de moyens de détection (11), et un moyen (13) répondant au signal ou aux signaux de détection non masqué(s) en produisant un signal (DV) représentant le fait que la donnée fournie audit microprocesseur est valide ou non.

2. Microprocesseur selon la revendication 1, dans lequel ledit moyen de commande (12) produit ladite information de masque en réponse à au moins une longueur et une position de la donnée devant faire l'objet d'un accès.

3. Microprocesseur selon la revendication 1 ou la revendication 2, dans lequel ledit moyen de commande produit ladite information de masque en réponse à une information de dimensionnement du bus ( B̅S̅Z̅ ) représentant la largeur du bus de données sur lequel les données devant faire l'objet d'un accès sont transférées.
